## Europäisches Patentamt
## European Patent Office
## Office européen des brevets

(19)

(11) Numéro de publication: **0 277 443 B1**

## FASCICULE DE BREVET EUROPEEN

(12)

(45) Date de publication de fascicule du brevet:
04.12.91

(51) Int. Cl.5: **H01G 1/14**, H01C 1/14

(21) Numéro de dépôt: 87402957.2

(22) Date de dépôt: **22.12.87**

(54) **Barrette de connexions pour la fabrication de composants électriques.**

(30) Priorité: **30.12.86 FR 8618354**

(43) Date de publication de la demande:
**10.08.88 Bulletin 88/32**

(45) Mention de la délivrance du brevet:
**04.12.91 Bulletin 91/49**

(84) Etats contractants désignés:
**DE GB IT**

(56) Documents cités:
**DE-A- 3 332 287**
**DE-A- 3 412 492**
**FR-A- 906 318**
**FR-A- 2 581 827**

(73) Titulaire: **COMPAGNIE EUROPEENNE DE COM-
POSANTS ELECTRONIOUES LCC
50, rue Jean -Pierre Timbaud B.P. 301
F-92402 Courbevoie(FR)**

(72) Inventeur: **Ponnelle, Joelle
THOMSON-CSF SCPI 19, avenue de Messine
F-75008 Paris(FR)**

(74) Mandataire: **Guérin, Michel et al
THOMSON-CSF SCPI
F-92045 PARIS LA DEFENSE CEDEX 67(FR)**

Rank Xerox (UK) Business Services

## Description

La présente invention concerne une barrette de connexions intervenant dans la fabrication de composants électriques et destinée à former les électrodes de sortie de ces composants. Elle concerne plus particulièrement la fabrication de condensateurs de moyenne puissance.

Une bande de connexions pour la fabrication de composants électriques à report direct est connue de FR 2 581 827. Cette bande est utilisée pendant tout le cycle de fabrication : d'abord comme support des éléments qui sont soudés sur des pattes solidaires de la barrette. La bande sert ensuite de plan de joint pour le moulage de la résine d'enrobage. Une découpe de la bande permet ensuite de réaliser les connexions électriques du composant qui sont serties sur son enrobage. Le produit obtenu se présente sous la forme d'un pavé parallélépipédique mieux connu sous l'appellation d'origine anglo-saxonne de condensateur chip. Ce chip peut être reporté sur un circuit imprimé par collage puis passé dans une vague de soudure pour assurer les liaisons électriques.

Une telle bande de connexions se prête particulièrement bien à la fabrication de condensateurs chips pour lesquels les valeurs de capacité sont généralement faibles ainsi que les courants de fonctionnement. Lorsque les courants sont élevés, il est nécessaire de disposer d'électrodes de surface relativement importante et de forte épaisseur. L'épaisseur de ces électrodes implique qu'on ne peut les replier facilement autour d'un enrobage de protection à la manière des condensateurs chips. D'autre part, la liaison électrique du condensateur avec le reste du circuit d'utilisation se fera de préférence par fixation mécanique (du type vis-écrou) plutôt que par soudure. Ce type de condensateur est souvent employé dans des dispositifs de traction électrique, donc soumis à des vibrations. Il est alors fortement recommandé que l'ensemble du condensateur soit correctement fixé, c'est-à-dire qu'en plus des électrodes qui sont maintenues serrées par vissage, le corps du condensateur doit lui aussi pouvoir être fixé à son support. Un simple enrobage du type décrit dans FR 2 581 827 ne permet pas de disposer de moyens de fixation simples et efficaces. Un boîtier moulé peut facilement être équipé d'organes élastiques de fixation contrairement à un enrobage de résine.

Pour des raisons de coût de revient on veut pouvoir fabriquer en série ces éléments et donc disposer d'une barrette se prêtant bien à l'automatisation.

Pour pallier les inconvénients de l'art antérieur, l'invention propose une barrette de connexions réalisée à partir d'une feuille métallique dans laquelle des découpes et une mise en forme sont pratiquées afin de réaliser des électrodes permettant le passage d'un courant relativement élevé et une fixation mécanique et électrique. La forme de ces électrodes permet d'assurer en cours de fabrication l'entraînement de la barrette et donc permet l'automatisation du procédé de fabrication.

L'invention a donc pour objet une barrette de connexions pour la fabrication d'au moins un composant électrique possédant deux électrodes de sortie formées à partir de la barrette, le composant devant être constitué à partir d'un élément passif ou actif possédant deux terminaisons électriques, caractérisée en ce qu'à chaque terminaison électrique correspond une connexion comprenant trois parties, une première partie constituant l'électrode de sortie, une seconde partie constituant une patte de fixation destinée à prendre contact avec l'une desdites terminaisons et une troisième partie constituant un élément de liaison électrique entre l'électrode de sortie et la patte de fixation, les connexions étant maintenues entre elles par une bande de maintien formée de tronçons disposés entre les électrodes.

L'invention sera mieux comprise et d'autres avantages apparaîtront au moyen de la description qui va suivre, donnée à titre non limitatif, et des figures annexées parmi lesquelles :
- les figures 1 à 3 illustrent le procédé d'obtention d'un élément capacitif film bobiné,
- la figure 4 représente une feuille métallique,
- la figure 5 représente le motif qui constituera la barrette de connexions selon l'invention,
- les figures 6 et 7 représentent en vues de face et de côté une partie de la barrette de connexions selon l'invention,
- la figure 8 est une vue de détail d'une partie de la barrette de connexions,
- les figures 9 et 12 illustrent le procédé de montage des condensateurs avec l'utilisation d'une barrette de connexions selon l'invention.

La suite de la description portera sur la fabrication de condensateurs bobinés mais l'invention peut s'appliquer à d'autres types de condensateurs et même à d'autres types de composants actifs ou passifs.

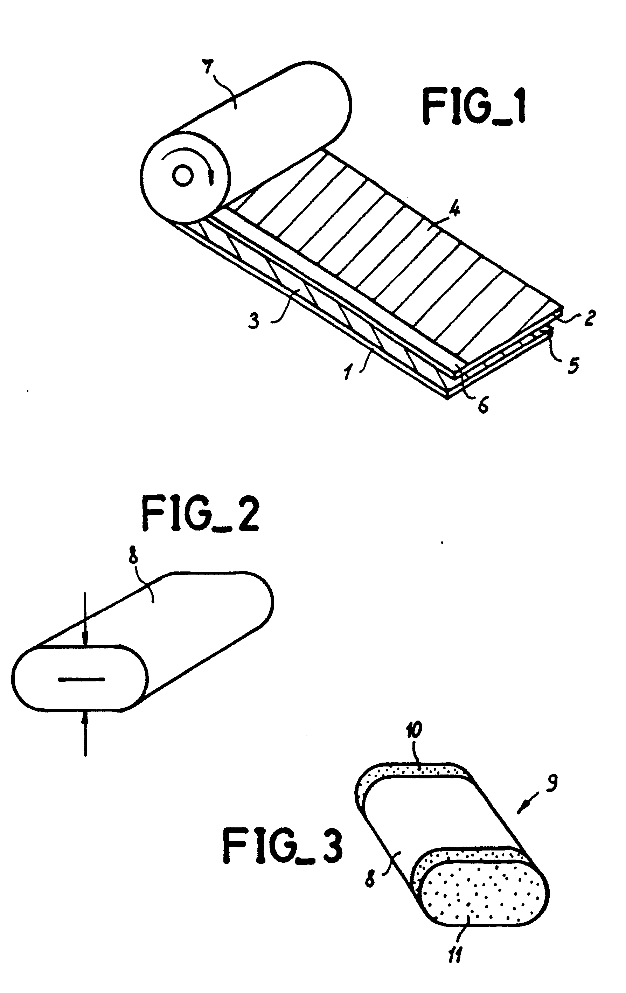

La figure 1 illustre une manière d'obtenir un condensateur bobiné à partir de deux films plastiques 1 et 2 supportant respectivement des métallisations 3 et 4 sur l'une de leur face. Les films sont disposés de sorte que les métallisations se trouvent situées d'un même côté de chaque film. Le film 1 comporte une marge latérale 5 non métallisée ou démétallisée. Le film 2 comporte une marge latérale 6 également non métallisée ou démétallisé et située du côté opposé à la marge 5. Les films sont décalés l'un par rapport à l'autre pour laisser dépasser latéralement leurs métallisations.

Le bobinage est effectué selon les techniques connues de l'homme de l'art.

Toujours selon les techniques connues de l'homme de l'art, la bobine obtenue est d'abord écrasée pour obtenir un élément plat 8 comme représenté à la figure 2.

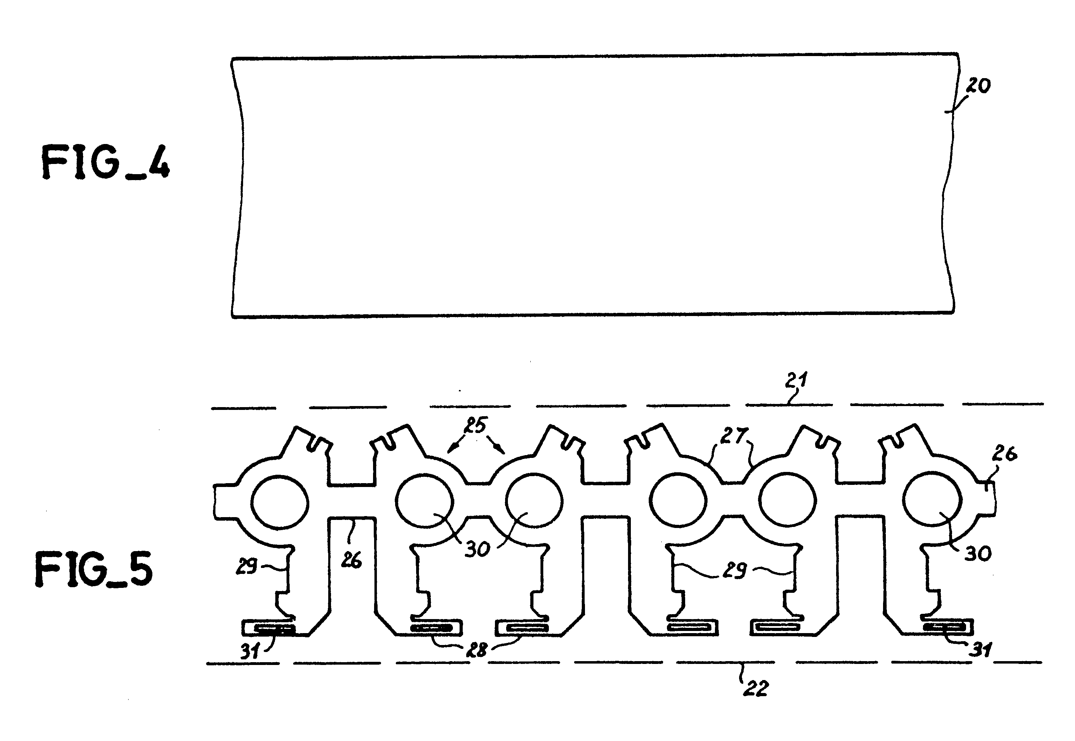

On obtient ensuite, comme représenté à la figure 3, un élément capacitif 9 par dépôt de métallisations 10 et 11 par exemple selon la technique connue sous le nom de schoopage.

Les condensateurs obtenus par cette méthode vont ensuite devoir être équipés d'électrodes de sortie et d'un boîtier isolant. Lorsque les condensateurs sont du type moyenne puissance, il est avantageux de prévoir de barrettes de connexions pouvant recevoir environ une dizaine d'éléments capacitifs.

Pour élaborer la barrette de connexions, on peut partir d'une feuille métallique se présentant sous la forme d'une bande. La figure 4 représente une telle feuille référencée 20. A titre d'exemple, il peut s'agir d'une bande d'environ 5 cm de largeur et de 0,6 mm d'épaisseur. Le matériau utilisé peut être du laiton étamé de classe UZ 15 mi-dur.

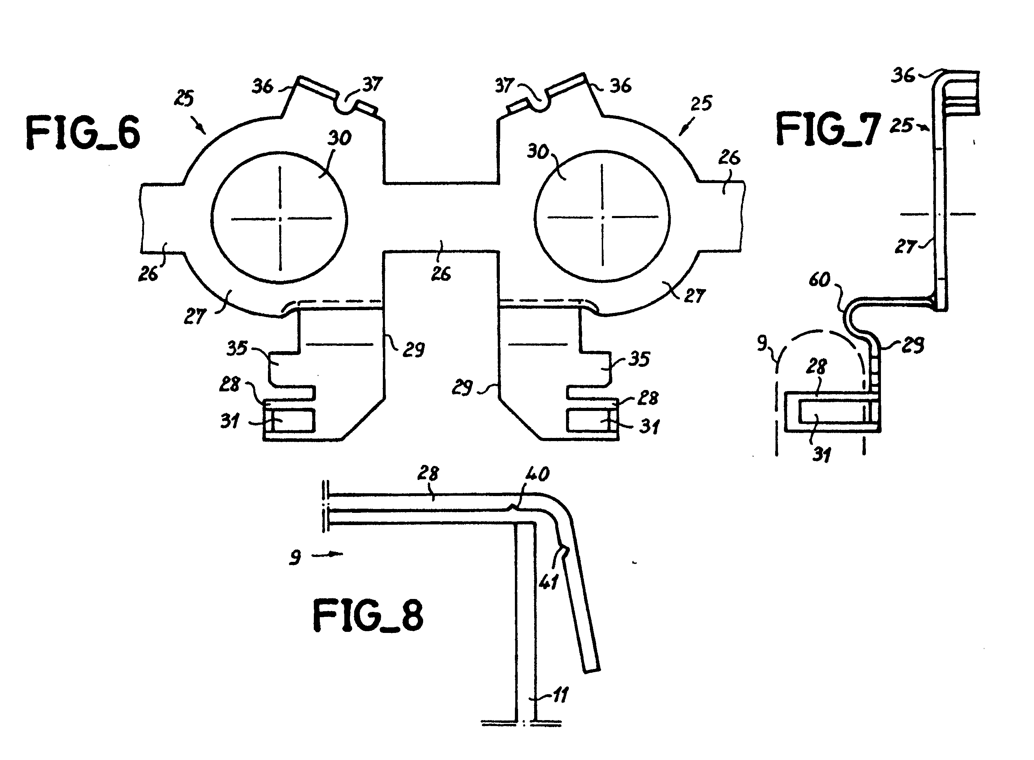

la feuille 20 est ensuite passée sous une presse pour réaliser des trous et de découpes selon le motif représenté à la figure 5 et donné à titre d'exemple. Sur cette figure on a représenté en traits pointillés les bords latéraux 21 et 22 de la feuille métallique utilisée. Le motif comprend une série de connexions 25 reliées entre elles par une bande de maintien 26. Chaque connexion comprend plusieurs parties : une partie 27 constituant l'électrode de sortie, une partie 28 constituant une patte de fixation et une partie centrale 29 constituant l'élément de liaison électrique entre les parties 27 et 28. Pour des raisons tenant au procédé de fabrication, il est avantageux que la bande de maintien 26 qui en fait n'est constituée que de tronçons joignant une connexion à la suivante, soit située au niveau des électrodes. On verra par la suite que seules ces parties émergeront de l'enrobage. La largeur de la bande de maintien 26 est de préférence choisie assez étroite pour que sa découpe puisse se faire de manière aisée. Le motif de la barrette de connexions peut bien sûr être différent, mais il respectera la structure indiquée ci-dessus en trois parties 27, 28 et 29. Les électrodes 27 possèdent un trou central 30, permettant le passage d'une vis de serrage. La forme circulaire donnée à ce trou est assez bien adaptée aux moyens de fixation courants, mais ce trou peut avoir une autre forme et même posséder une ouverture de manière à laisser passer un élément quelconque. Chaque patte de fixation 28 comprend une lumière 31.

La barrette de connexions est ensuite mise en forme, par exemple par emboutissage. Cette mise en forme n'est pas vraiment obligatoire puisqu'il suffit de replier les pattes de fixation 28 pour engager les éléments capacitifs, mais elle apportera des avantages non négligeables.

La figure 6 représente un détail de la barrette de connexions après sa mise en forme. Sont visibles notamment deux connexions 25 qui seront utilisées pour un même élément capacitif. La figure 7 est une vue de côté de la figure 6. Elle montre bien la forme donnée à la barrette de connexions. Les parties 27 constituant les électrodes de sortie se trouvent dans un plan décalé par rapport aux autres parties des connexions. Ceci peut permettre la fixation du condensateur sur un panneau sans être gêné par le corps due condensateur. La partie centrale 29 a la forme générale d'un L renversé.

Sur les figures 6 et 7, les pattes de fixation 28 sont des languettes qui ont été repliées. L'élément capacitif viendra s'insérer entre les pattes de fixation, ses faces schoopées étant en contact avec les parties repliées des pattes. Le corps de l'élément capacitif 9 est indiqué en trait pointillés sur la figure 7.

Les parties 35 de l'élément de liaison électrique 29 serviront de guides lors de la mise en boîtier, celui-ci possédant des rainures de réception. Sur la figure 6, les pattes de fixation 28 sont repliées pour recevoir l'élément capacitif. Une fois cet élément mis en position, les pattes seront fermées davantage pour assurer le contact et seront situées légèrement en retrait des guides 35 qui pourront assurer leur fonction sans aucune gêne.

La partie horizontale de la forme en L de l'élément de liaison électrique 29 servira de butée lors de l'introduction de l'élément capacitif dans son boîtier.

Les électrodes peuvent comprendre des zones annexes facilitant les liaisons mécaniques ou électriques avec d'autres éléments. Par exemple, les zones débordantes 36 repliées et munies chacune d'une encoche 37 permettent le placement d'un fil électrique et une bonne prise pour sa soudure.

Les pattes de connexion 28 sont pourvues d'une lumière 31 qui leur procure plus de souplesse. L'extrémité des pattes peut être fermée, pour leur donner comme le montrent les figures 6 et 7 une bonne rigidité. La constitution donnée aux pattes permet une meilleure soudure sur les faces schoopées des éléments capacitifs.

La figure 8 est une vue de détail de l'extrémité d'une patte de fixation 28. L'élément capacitif 9 qui sera enserré entre les pattes de fixation a été représenté en partie avec l'une de ses terminaisons électriques 11. La patte 28 possède deux entailles 40 et 41 réalisées sur son côté interne. Les pattes sont d'abord pliées selon un angle supérieur à 90° comme le montre la figure 8 et la pliure est située entre les deux entailles. Une fois l'élément capacitif mis en position, les extrémités des pattes seront serrées sur les terminaisons électriques de l'élément capacitif, les entailles 40 et 41 facilitant le pliage.

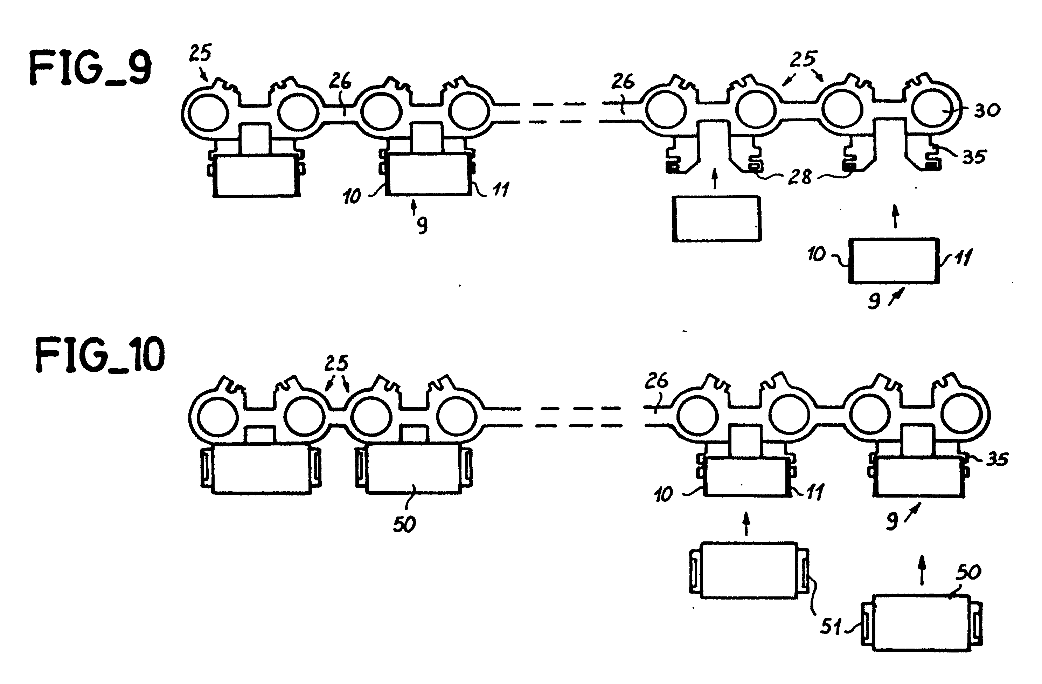

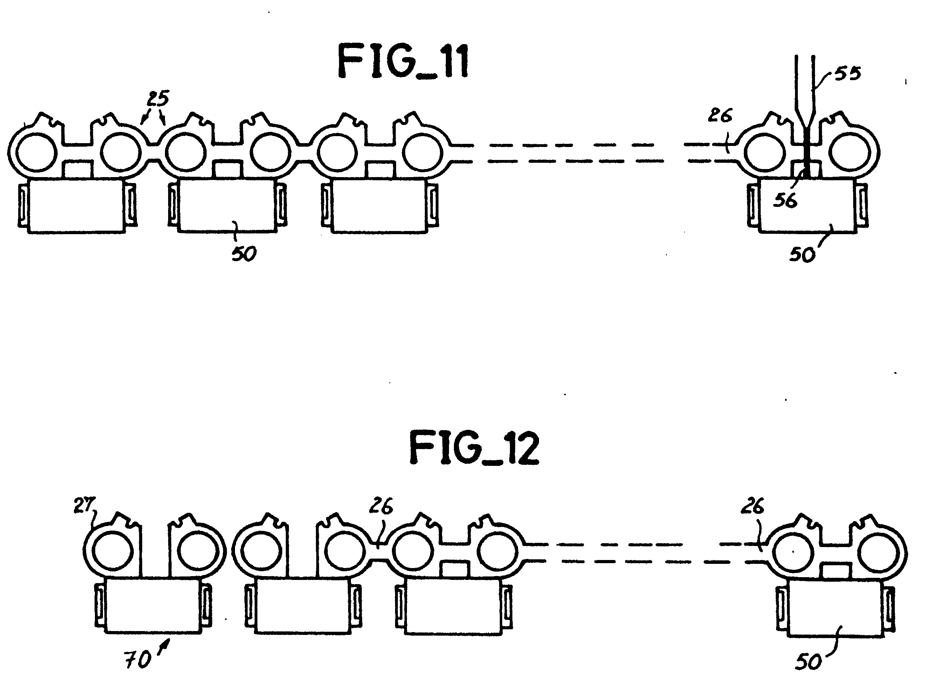

Le cycle de montage des éléments capacitifs sur les barrettes de connexions peut se faire de la manière suivante, en relation avec les figures 9 et 12. Les trous 30 peuvent être avantageusement utilisés pour l'entraînement des barrettes par un dispositif approprié et connu en soi dans le cadre d'une fabrication automatisée.

Comme le montre la figure 9, les éléments capacitifs sont introduits successivement entre les pattes de fixation 28 prévues à cet effet et qui sont repliées mais encore suffisamment écartées comme le montre la figure 8. Les pattes de fixation sont alors repliées contre les terminaisons 10 et 11 et soudées. Toutes ces opérations peuvent se faire automatiquement au fur et à mesure de l'avancement de la barrette de connexions.

La figure 10 illustre la mise en boîtier. Les boîtiers 50 peuvent être des pièces moulées possédant deux languettes de retenue 51 qui serviront à fixer par simple pression le composant obtenu, par exemple sur un panneau. Les guides 35 permettent une mise en place correcte du boîtier si celui-ci possède des rainures de réception correspondantes. Les dimensions respectives du boîtier, de l'élément capacitif et des connexions sont telles qu'après la pose de boîtier, celui-ci reste en place jusqu'à l'opération suivante.

La figure 11 illustre l'opération de coulage de la résine d'enrobage. Les éléments capacitifs équipés de leurs boîtiers passent successivement devant un dispositif de remplissage comprenant une seringue 55 distribuant un jet de résine 56. Il est avantageux que, comme le montre la figure 7, la partie centrale 29 des connexions 25 possède un coin saillant 60. En effet, la partie verticale du L renversé constituant la partie centrale 29 va se trouver plaquer contre une paroi interne du boîtier 50 et la résine ne pourra couler entre cette partie des connexions et la paroi du boîtier adjacente. Il peut alors y avoir une mauvaise étanchéité à ce niveau. Avec la présence du coin saillant 60, la résine peut venir adhérer à la paroi du boîtier adjacente aux connexions.

La résine est ensuite polymérisée par étuvage, la barrette de connexions permettant le transport de composants.

La figure 12 illustre l'opération de découpe de la barrette de connexions pour laisser visibles les électrodes 27. En même temps que l'opération de découpe destinée à éliminer tous les tronçons constituant la bande de maintien 26, on peut effectuer un marquage des condensateurs 70 ainsi constitués. Ce marquage peut être réalisé par impression sur une face d'une électrode 27 pour, par exemple, indiquer le numéro de série de fabrication du condensateur.

**Revendications**

1. Barrette de connexions pour la fabrication d'au moins un composant électrique (70) possédant deux électrodes de sortie formées à partir de la barrette, le composant devant être constitué à partir d'un élément (9) passif ou actif possédant deux terminaisons électriques (10, 11), caractérisée en ce qu'à chaque terminaison électrique correspond une connexion (25) comprenant trois parties, une première partie constituant un électrode de sortie (27), une seconde partie constituant une patte de fixation (28) destinée à prendre contact avec l'une desdites terminaisons et une troisième partie constituant un élément de liaison électrique (29) entre l'électrode de sortie et la patte de fixation, les connexions étant maintenues entre elles par une bande de maintien (26) formée de tronçons disposés entre les électrodes (27).

2. Barrette de connexions selon la revendication 1, caractérisée en ce que ladite partie constituant l'électrode de sortie (27) comprend un trou.

3. Barrette de connexions selon la revendication 2, caractérisée en ce que ledit trou est un trou circulaire central (30).

4. Barrette de connexions selon l'une quelconque des revendications 1 à 3, caractérisée en ce que l'électrode comprend au moins une zone débordante (36).

5. Barrette de connexions selon la revendication 4, caractérisée en ce que ladite zone débordante comprend au moins une encoche (37).

6. Barrette de connexions selon l'une quelconque des revendications 1 à 5, caractérisée en ce que ladite patte de fixation (28) est formée d'une languette destinée à être repliée à angle droit.

7. Barrette de connexions selon l'une quelconque des revendications 1 à 6, caractérisée en ce que la patte de fixation (28) est pourvue d'une lumière intérieure (31).

8. Barrette de connexions selon l'une quelconque des revendications 1 à 7, caractérisée en ce que des entailles (40, 41) sont effectuées sur ladite patte de fixation (28) sur la face destinée à être en regard dudit élément (9) passif ou actif, les entailles étant situées de chaque côté de l'endroit où s'effectue la pliure.

9. Barrette de connexions selon l'une quelconque des revendications 1 à 8, caractérisée en ce que ladite électrode (27) est située dans un plan différent du plan des pattes de fixation (28).

10. Barrette de connexions selon la revendication 9, caractérisée en ce que l'existence de ces différents plans est due à la forme en L renversé donnée à l'élément de liaison électrique (29).

11. Barrette de connexions selon la revendication 10, caractérisée en ce que le coin (60) formé par la jonction des deux branches du L est un coin saillant.

12. Barrette de connexions selon l'une quelconque des revendications 1 à 11, caractérisée en ce que l'élément de liaison électrique (29) comprend une zone jouant le rôle de guide (35) pour faciliter la pose d'un boîtier (50) de protection pour ledit composant.

13. Barrette de connexions selon l'une quelconque des revendications précédentes, caractérisée en ce qu'elle est en laiton.

**Claims**

1. A connection stick for the manufacture of at least one electrical component (70) having two output electrodes formed from the stick, said component being adapted to be constituted starting with a passive or active element (9) having two electrical terminations (10 and 11), characterized in that to each termination there corresponds a connection (25) comprising three parts, a first part constituting the output electrode (27), a second electrode constituting a securing foot (28) adapted to make contact with one of the said terminations and a third part constituting an electrical connection element (29) between the output electrode and the securing foot, the connections being held in relation to each other by a support band (26) formed by stubs placed between the electrodes (27).

2. The connection stick as claimed in claim 1, characterized in that the said part constituting the output electrode (27) has a hole.

3. The connection stick as claimed in claim 2, characterized in that the said hole is a circular central hole (30).

4. The connection stick as claimed in any one of the preceding claims 1 through 3, characterized in that the electrode comprises at least one rim zone (36).

5. The connection stick as claimed in claim 4, characterized in that the said rim zone comprises at least one notch (37).

6. The connection stick as claimed in any one of the preceding claims 1 through 5, characterized in that the said securing foot (28) is formed by a tongue adapted to be folded over at a right angle.

7. The connection stick as claimed in any one of the preceding claims 1 through 6, characterized in that the said securing foot (28) is provided with an internal opening (31).

8. The connection stick as claimed in any one of the preceding claims 1 through 7, characterized in that the notches (40 and 41) are produced on the said securing foot (28) on the surface adapted to be opposite to the said passive or active element (9), said notches being placed on either side of the site of bending.

9. The connectionstick as claimed in any one of the claims 1 through 8, characterized in that the said electrode (27) is placed in a plane different to the plane of the securing feet (28).

10. The connection stick as claimed in claim 9, characterized in that the existence of these different planes is due to the reversed L form of the electrical connection element (29).

11. The connection stick as claimed in claim 10, characterized in that the corner (60) formed by the junction of the two branches of the letter L is an outside corner.

12. The connection stick as claimed in any one of the preceding claims 1 through 11, characterized in that the electrical connection element (29) comprises a zone playing the part of a guide (35) in order to facilitate the mounting of a guard box (50) for the said component.

13. The connection stick as claimed in any one of the preceding claims, characterized in that it is made of brass.

**Patentansprüche**

1. Verbindungsstreifen zur Herstellung wenigstens eines elektrischen Bauelementes (70), der zwei aus dem Streifen gebildete Ausgangselektroden besitzt, wobei das Bauelement aus einem passiven oder aktiven Element (9) mit zwei elektrischen Anschlüssen (10, 11) bestehen soll, dadurch gekennzeichnet, daß jedem elektrischen Anschluß eine drei Teile umfassende Verbindung (25) entspricht, ein die Ausgangselektrode (27) entsprechender erster Teil, ein eine Befestigungsfahne (28) bildender zweiter Teil, der für den Kontakt mit einem der Anschlüsse bestimmt ist, und ein dritter Teil, der ein elektrisches Verbindungselement (29) zwischen der Ausgangselektrode und der Befestigungsfahne bildet, wobei die gegenseitigen Verbindungen mittels eines Haltebandes (26), das aus zwischen den Elektroden (27) angeordneten Teilstücken gebildet ist, aufrechterhalten werden.

2. Verbindungsstreifen gemäß Anspruch 1, dadurch gekennzeichnet, daß der die Ausgangselektrode (27) bildende Teil ein Loch aufweist.

3. Verbindungsstreifen gemäß Anspruch 2, dadurch gekennzeichnet, daß das Loch ein mittiges kreisförmiges Loch (30) ist.

4. Verbindungsstreifen gemäß einem der Ansprüche 1 bis 3, dadurch gekennzeichnet, daß die Elektrode wenigstens einen vorstehenden Bereich (36) umfaßt.

5. Verbindungsstreifen gemäß Anspruch 4, dadurch gekennzeichnet, daß der vorstehende Bereich wenigstens eine Vertiefung (37) aufweist.

6. Verbindungsstreifen gemäß einem der Ansprüche 1 bis 5, dadurch gekennzeichnet, daß die Befestigungsfahne (28) aus einer Zunge gebildet ist, die dazu bestimmt ist, im rechten Winkel abgebogen zu werden.

7. Verbindungsstreifen gemäß einem der Ansprüche 1 bis 6, dadurch gekennzeichnet, daß die Befestigungsfahne (28) mit einem inneren Langloch (31) versehen ist.

8. Verbindungsstreifen gemäß einem der Ansprüche 1 bis 7, dadurch gekennzeichnet, daß an der Befestigungsfahne (28) an der Seite, die dazu bestimmt ist, gegenüber dem passiven oder aktiven Element (9) angeordnet zu werden, Schlitze (40, 41) ausgebildet sind, die sich beiderseits der Stelle, an der die Biegung ausgeführt wird, befinden.

9. Verbindungsstreifen gemäß einem der Ansprüche 1 bis 8, dadurch gekennzeichnet, daß sich die Elektrode (27) in einer von der Ebene der Befestigungsfahne (28) verschiedenen Ebene befindet.

10. Verbindungsstreifen gemäß Anspruch 9, dadurch gekennzeichnet, daß das Vorhandensein dieser verschiedenen Ebenen durch die Form eines umgedrehten L, die dem elektrischen Verbindungselement (29) gegeben wird, bewirkt wird.

11. Verbindungsstreifen gemäß Anspruch 10, dadurch gekennzeichnet, daß die Ecke (60), die durch die Verbindung der zwei Schenkel des L gebildet wird, eine vorstehende Ecke ist.

12. Verbindungsstreifen gemäß einem der Ansprüche 1 bis 11, dadurch gekennzeichnet, daß das elektrische Verbindungselement (29) einen die Führungsfunktion bewirkenden Bereich (35) umfaßt, um die Anbringung eines Schutzgehäuses (50) für das Bauelement zu erleichtern.

13. Verbindungsstreifen gemäß einem der vorangehenden Ansprüche, dadurch gekennzeichnet, daß er aus Messing besteht.

**FIG_1**

**FIG_2**

**FIG_3**

## FIG_4

## FIG_5

EP 0 277 443 B1

FIG_6

FIG_7

FIG_8

FIG_9

FIG_10

EP 0 277 443 B1

# FIG_11

# FIG_12

EP 0 277 443 B1